# EUROPÄISCHE PATENTSCHRIFT

(11) **EP 2 018 585 B1**
(45) Veröffentlichungstag und Bekanntmachung des Hinweises auf die Patenterteilung: **01.10.2014**
(21) Anmeldenummer: 07724651.0
(22) Anmeldetag: 27.04.2007
(51) Int. Cl.: G02B 7/00, G02B 21/24

(54) **MIKROSKOP MIT WECHSELEINRICHTUNG FÜR OPTISCHE ELEMENTE**
MICROSCOPE WITH A CHANGING DEVICE FOR OPTICAL ELEMENTS
MICROSCOPE AVEC DISPOSITIF INTERCHANGEABLE POUR ÉLÉMENTS OPTIQUES

(30) Priorität: 19.05.2006 DE 102006024109
(43) Veröffentlichungstag der Anmeldung: 28.01.2009
(73) Patentinhaber: Carl Zeiss Microscopy GmbH, 07745 Jena (DE)
(72) Erfinder: WAHL, Hubert, 07646 Stadtroda (DE); DIETZSCH, Leander, 07743 Jena (DE); BÖKER, Christian, 37130 Gleichen (DE); KRÄMER, Peter, 37130 Gleichen/Reinhausen (DE)
(74) Vertreter: Scholze, Humbert
(86) Internationale Anmeldenummer: PCT/EP2007/003721
(87) Internationale Veröffentlichungsnummer: WO 2007/134698

(56) Entgegenhaltungen:
- EP-A- 1 731 941
- DE-A1- 10 336 890
- DE-A1- 19 702 754
- DE-A1- 19 936 497
- DE-A1-102004 048 300
- DE-A1-102004 061 901
- US-A1- 2001 008 461

## Beschreibung

Die Erfindung bezieht sich auf ein Mikroskop mit einer Wechseleinrichtung, mit welcher optische Elemente unterschiedlicher optischer Eigenschaften in Abhängigkeit von der jeweils mit dem Mikroskop zu lösenden Beleuchtungs- und/oder Beobachtungsaufgabe in den Mikroskopstrahlengang gestellt werden.

Bei den bekannten Mikroskopen aufrechter wie auch inverser Bauart befinden sich im Raum zwischen Objektiv und Tubuslinse häufig Wechseleinrichtungen, mit denen optische Elemente wie beispielsweise Filter, Blenden oder auch Baugruppen zur Einspiegelung einer Auflichtbeleuchtung vorübergehend in den Mikroskopstrahlengang eingekoppelt werden können. Oft sind diese optischen Elemente in Magazinen bevorratet, sogenannten Revolvern, die eine drehbare Trommel aufweisen, auf der die optischen Elemente abgelegt sind und mit Drehung der Trommel wahlweise in den Strahlengang gestellt werden können.

Es sind Wechseleinrichtungen bekannt, die lediglich nur einen fest eingebauten Revolver umfassen; alternativ dazu aber auch Wechseleinrichtungen, die zur Aufnahme mehrerer verschiedener Revolver geeignet sind, um diese je nach Bedarf am Mikroskop gegeneinander austauschen zu können, siehe z.B. DE 199 36 497.

Auch das zeitweilige Einbringen von Vergrößerungsoptiken, Kontrasteinheiten oder Analysatoren in den Strahlengang mittels in Form von Schiebern ausgebildeten Magazinen ist bekannt.

Bei Mikroskopen kleinerer Bauart beispielsweise sind eingebaute Führungen üblich, die dazu dienen, einzelne Spiegel und/oder Filter unterschiedlicher optischer Eigenschaften zeitweilig in den Strahlengang einzubringen.

Für viele Anwendungen des Mikroskops müssen lediglich nur zwei oder drei optische Elemente während der Beobachtung gegeneinander ausgetauscht werden. In diesen Fällen sind Wechseleinrichtungen mit fünf, sechs oder noch mehr Halterungen für optische Elemente überdimensioniert und behindern dadurch oft auch die Sicht auf das Präparat, was besonders bei aufrechten Mikroskopen der Fall ist, bei denen der Revolver zum Betrachter hin angeordnet ist.

Andererseits genügen Wechseleinrichtungen mit einer geringen Anzahl gegeneinander auszuwechselnder optischer Elemente nicht den Erfordernissen der Mikroskopie bei Anwendung unterschiedlicher Kontrastverfahren oder unterschiedlicher Fluoreszenz-Anregungen.

Von diesem Stand der Technik ausgehend liegt der Erfindung die Aufgabe zugrunde, Mikroskope dahingehend weiterzubilden, daß die Erschließung unterschiedlichster Anwendungsfälle unter Vermeidung der beschriebenen Nachteile gegeben ist.

Die Erfindung ist in Anspruch 1 definiert.

Erfindungsgemäß ist bei Mikroskopen der eingangs beschriebenen Art die Wechseleinrichtung ausgestattet mit Mitteln
- zur Aufnahme eines einzelnen, ein- bzw. auszuschwenkenden optischen Elementes und zu dessen funktionsgerechter Ausrichtung im Mikroskopstrahlengang, und
- zur Aufnahme von Magazinen unterschiedlicher Bauart, in denen optische Elemente in unterschiedlicher Anzahl bevorratet sind, und zur funktionsgerechten Ausrichtung jeweils von mindestens einem dieser Elemente im Mikroskopstrahlengang.

Der wesentliche Vorteil der erfindungsgemäßen Wechseleinrichtung ergibt sich aus ihrer universellen Nutzbarkeit für vielfältige Eingriffe in die Beobachtung oder Beleuchtung von Objekten.

Mikroskope mit einer solchen universellen Wechseleinrichtung sind im Unterschied zum Stand der Technik dazu geeignet, je nach Wahl des Anwenders und angepaßt an die jeweilige Beobachtungsaufgabe entweder nur ein einzelnes ausgewähltes optisches Elemente in den Strahlengang zu stellen oder alternativ dazu eines von verschiedenen Magazinen auszuwählen, in denen eine der jeweiligen Beobachtungsaufgabe angepaßte optimale Anzahl von optischen Elementen bevorratet ist und das somit eine der Beobachtungsaufgabe angemessene, weder über- noch unterdimensionierte Baugröße hat.

Diese Magazine können beispielsweise Schieber kleinerer Größe zur Aufnahme von einem oder zwei bis drei optischen Elementen, Schieber größerer Ausführung zur Aufnahme von vier oder mehr Elementen, oder auch sogenannte Revolver zur Bevorratung einer geringen Anzahl von optischen Elementen (und damit geringer Baugröße) bzw. Revolver mit einer Kapazität für eine größere Anzahl von optischen Elementen sein.

Unter optischen Elementen im Sinne dieser Erfindung sind die Mittel zu verstehen, die geeignet sind, den Beobachtungs- oder Beleuchtungsstrahlengang in der gewünschten, im Zusammenhang mit der jeweils zu lösenden Beobachtungs- oder Beleuchtungsaufgabe stehenden Weise zu beeinflussen. Solche optischen Elemente können auch aus mehreren optisch wirksamen Grundelementen zusammengesetzt sein, so wie Objektive aus mehreren Linsen zusammengesetzt sind.

Magazine in Form von Schiebern besitzen in der Regel mehrere in Reihe angeordnete Halterungen, die jeweils ein optisches Element aufnehmen. Beispielsweise ist zur Ankopplung jeweils eines ausgewählten, der aktuellen Beobachtungs- oder Beleuchtungsaufgabe angemessenen Schiebers an das Mikroskopstativ eine Geradführung vorgesehen, wobei der Schieber mit einer Gleitbahn in eine am Mikroskopstativ angearbeitete Führungsbahn eingreift.

Dabei kann der Verschiebeweg des Schiebers innerhalb des Mikroskopstativs vorteilhaft so in Raststellungen gegliedert sein, daß in jeder Raststellung eines der auf dem Schieber bevorrateten optischen Elemente funktionsgerecht im Mikroskopstrahlengang positioniert ist.

In den Fällen, in denen die Magazine in Form von Revolvern ausgebildet sind, befinden sich die optischen Elemente auf einer drehbaren Trommel. Beispielsweise ist hier ebenfalls eine Geradführung zur Ankopplung eines von mehreren Revolvern an das Mikroskopstativ vorgesehen, wobei eine am Revolver ausgebildete Gleitbahn, etwa in Form eines sogenannten Schwalbenschwanzes, in eine am Mikroskopstativ angearbeitete Führungsbahn eingreift, die eine zum Schwalbenschwanz komplementäre Form hat. Andere Führungsarten, wie sie in der Feingerätetechnik bekannt sind, sind denkbar.

In der Geradführung wird der Revolver innerhalb des Mikroskopstativs soweit verschoben, bis er seine Arbeitsposition erreicht hat, die durch justierbare Anschläge definiert sein kann. In der Arbeitsposition des Revolvers wird durch Drehung der Trommel um einen bestimmten Drehwinkel eines der auf der Trommel bevorrateten optischen Elemente im Mikroskopstrahlengang plaziert.

So können beispielhaft Revolver vorhanden sein, auf deren Trommeln mehrere optische Elemente, wie beispielsweise Objektive mit unterschiedlichen optischen Eigenschaften, bevorratet sind und so zur Auswahl zur Verfügung stehen.

Erfindungsgemäß ist ein Adapter vorgesehen, der die Ankopplung verschiedenartiger Magazine, wie Schieber oder Revolver, oder auch die Ankopplung einzelner optischer Elemente an das Mikroskopstativ ermöglicht.

Dieser Adapter ist ein Kreuzschlitten mit zwei orthogonal zueinander ausgerichteten Geradführungen, wobei über eine erste Geradführung der Adapter an das Mikroskopstativ gekoppelt ist und mittels der zweiten Geradführung wahlweise ein Revolver, ein Schieber oder auch ein einzelnes optisches Element an den Adapter gekoppelt ist. Auf diese Weise sind der Revolver, der Schieber bzw. das einzelne optische Element mittelbar über den Adapter mit dem Mikroskopstativ verbunden. Die Arbeitspositionen von Revolver, Schieber oder einzelnem optischen Element können auch hierbei durch Rastungen oder Anschläge definiert sein.

Als optische Elemente in den Magazinen kommen beispielsweise Strahlteiler in Betracht, die zur Ein- oder Auskopplung eines Teilstrahlengangs in oder aus dem Beobachtungsstrahlengang dienen, oder Spiegel, Wellenlängenfilter und Vergrößerungsoptiken, die zwecks Anpassung des Mikroskops an die jeweilige Beobachtungsaufgabe zeitweilig in den Mikroskopstrahlengang eingebracht werden sollen, oder auch optische Elemente für Kontrastverfahren, wie Dunkelfeld, Polarisationskontrast oder Differentialinterferenzkontrast. Selbstverständlich sind auch Kombinationen verschiedener Elemente auf einem Magazin denkbar.

Zusammenfassend sind erfindungsgemäß Wechseleinrichtungen vorgesehen, die mit Mitteln sowohl zur Aufnahme eines einzelnen optischen Elementes und zu dessen funktionsgerechter Ausrichtung im Mikroskopstrahlengang, als auch zur Aufnahme von Magazinen, in denen optische Elemente in unterschiedlicher Anzahl bevorratet sind, und zur funktionsgerechten Ausrichtung jeweils eines dieser Elemente im Mikroskopstrahlengang ausgestattet sind.

Die Erfindung wird nachfolgend anhand von Ausführungsbeispielen näher erläutert. In den zugehörigen Zeichnungen zeigen
- Fig. 1: ein erstes Ausführungsbeispiel, bei dem am Mikroskopstativ mehrere Geradführungen zur Ankopplung verschiedenartiger Magazine oder einzelner optischer Elemente vorhanden sind,
- Fig. 2: ein zweites Ausführungsbeispiel, bei dem am Mikroskopstativ eine Geradführung vorhanden und ein Adapter vorgesehen ist, der zur mittelbaren Ankopplung verschiedenartiger Magazine bzw. einzelner optischer Elemente an das Mikroskopstativ dient.

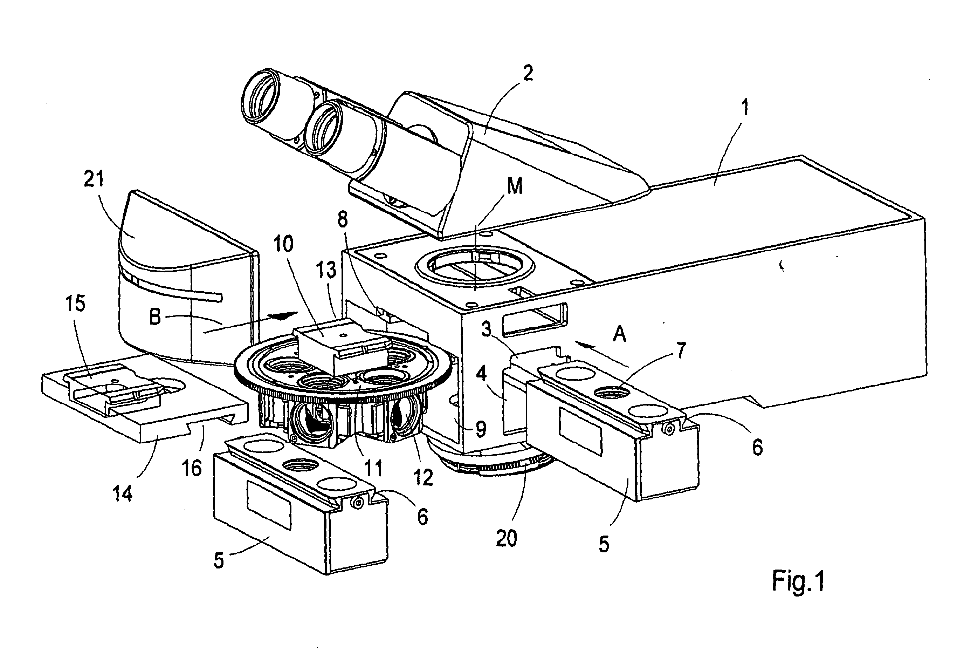

In Fig.1 sind von einem Mikroskop andeutungsweise das Mikroskopstativ 1 und der Mikroskoptubus 2 dargestellt. Erfindungsgemäß ist im Mikroskopstativ 1 ein Durchbruch 4 vorhanden, der mit der Führungsbahn 3 einer ersten, bevorzugt als Schwalbenschwanzführung ausgebildeten Geradführung versehen ist.

Des weiteren ist ein Schieber 5 zu erkennen, dessen Querschnitt geometrisch komplementär zum Durchbruch 4 gestaltet ist, und zwar so, daß der Schieber 5 mit ausreichendem Spiel in den Durchbruch 4 eingeführt werden kann.

Der Schieber 5 ist an seiner Oberseite mit einer Gleitbahn 6 versehen, die gemeinsam mit der Führungsbahn 3 die besagte Schwalbenschwanz-Geradführung bildet.

Die Oberseite des Schiebers 5 weist neben der Gleitbahn 6 beispielhaft drei Halterungen 7 für optische Elemente auf, wie etwa Filter oder Reflektoren. Sind die Halterungen 7 mit optischen Elementen besetzt, wird der Schieber 5 in Richtung A in das Mikroskopstativ 1 eingeschoben, wobei die Gleitbahn 6 in die Führungsbahn 3 eingreift und dabei der Schieber 5 mittels der Schwalbenschwanz-Geradführung paßgenau geführt und positioniert wird.

In Abhängigkeit von der Verschiebeweite wird wahlweise eines der drei optischen Elemente zentrisch zur optischen Achse des Mikroskopstrahlengangs M und damit funktionsgerecht im Mikroskopstativ 1 positioniert.

In vorteilhafter Weise können einerseits am Mikroskopstativ 1 und andererseits am Schieber 5 Rastelemente vorgesehen sein, die miteinander korrespondieren und dann ineinandergreifen, wenn eines der optischen Elemente exakt seine funktionsgerechte Position im Mikroskopstativ 1 erreicht hat. Derartige Rastungen sind aus der Feingerätetechnik bekannt und müssen daher an dieser Stelle hier nicht näher beschrieben werden.

Orthogonal ausgerichtet zu der Führungsbahn 3 und dem Durchbruch 4 befinden sich am Mikroskopstativ 1 eine weitere Führungsbahn 8 sowie ein weiterer Durchbruch 9. Die Führungsbahn 8 und der Durchbruch 9 ermöglichen (alternativ zum Schieber 5) beispielsweise einen Revolver 10 in das Mikroskopstativ 1 einzubringen, auf dessen Trommel 11 (hier beispielhaft sechs) Halterungen 12 für optische Elemente vorhanden sind.

An der Oberseite des Revolvers 10 befindet sich eine Gleitbahn 13, beispielsweise ebenfalls in Form eines Schwalbenschwanzes, die spielfrei in die Führungsbahn 8 eingreift, so daß der Revolver 10 mittels der zweiten, aus Führungsbahn 8 und Gleitbahn 13 gebildeten Schwalbenschwanz-Geradführung in der Richtung B in das Mikroskopstativ 1 eingeschoben werden kann. Voraussetzung dafür ist allerdings, daß das Mikroskopstativ 1 nicht bereits durch den Schieber 5 besetzt ist.

Der Verschiebeweg beim Einführen des Revolvers 10 ist vorteilhaft durch Anschläge begrenzt, die zugleich die Arbeitsposition des Revolvers 10 im Mikroskopstativ 1 definieren. Hat der Revolver 10 innerhalb des Mikroskopstativs 1 seine Arbeitsposition erreicht, läßt sich durch Drehung der Trommel 11 um einen entsprechenden Drehwinkel eine ausgewählte Halterungen 12 und mit dieser ein für die aktuelle Beobachtungsaufgabe geeignetes optisches Element in den Mikroskopstrahlengang M stellen, wie beispielsweise ein Strahlteiler zur Einkopplung einer Auflichtbeleuchtung.

Auch in diesem Fall kann die funktionsgerechte Position des optischen Elementes durch Raststellungen definiert sein.

Je nach der auszuführenden Beleuchtungs- und/oder Beobachtungsaufgabe lassen sich erfindungsgemäß auf diese Weise entweder der Schieber 5 oder der Revolver 10, jeweils mit den benötigten optischen Elementen besetzt, in das Mikroskopstativ 1 einbringen.

Fig.1 zeigt zugleich neben dem bisher beschriebenen Beispiel die Erfindung, die nachstehend erläutert wird.

In diesem Fall ist ein Adapter in Form eines Kreuzschlittens 14 vorgesehen. Der Kreuzschlitten 14 weist auf seiner Oberseite eine Gleitbahn 15 auf, die in Gestalt und Abmessung der am Revolver 10 ausgebildeten Gleitbahn 13 entspricht. Weiterhin ist an den Kreuzschlitten 14 eine Führungsbahn 16 angearbeitet, die in Gestaltung und Abmessung der Führungsbahn 3 im Mikroskopstativ 1 entspricht und damit zur Aufnahme der Gleitbahn 6 des Schiebers 5 geeignet ist.

Soll nun das Mikroskop in Verbindung mit dem Revolver 10 genutzt werden, wird dieser, wie bereits oben beschrieben, in Richtung B in das Mikroskopstativ 1 eingeführt. Besteht dagegen die Absicht, das Mikroskop in Verbindung mit dem Schieber 5 zu benutzen, wird anstelle des Revolvers 10 zunächst der Kreuzschlitten 14 (in derselben Weise wie der Revolver 10) in das Mikroskopstativ 1 eingebracht, wobei jetzt anstelle der Gleitbahn 13 des Revolvers 10 die Gleitbahn 15 des Kreuzschlittens 14 in die Führungsbahn 8 eingreift.

Auch in diesem Fall ist durch Anschläge eine Arbeitsposition des Kreuzschlittens 14 innerhalb des Mikroskopstativs 1 definiert. Hat der Kreuzschlitten 14 seine Arbeitsposition im Mikroskopstativ 1 erreicht, kann nun - anstelle des Revolvers 10 - der Schieber 5 in bereits oben beschriebener Weise in Richtung A in das Mikroskopstativ 1 eingeführt werden.

In der Erfindung erübrigen sich die Führungsbahn 3 am Mikroskopstativ 1, da nun die Gleitbahn 6 des Schiebers 5 in die Führungsbahn 16 des Kreuzschlittens 14 eingreift bzw. zum Einbringen des Schiebers 5 der Durchbruch 9 benutzt werden kann. Der Durchbruch 4 kann weiterhin zum Einbringen des Schiebers 5 in Richtung A bzw. zur Positionierung der auf dem Schieber 5 abgelegten optischen Elemente durch Verstellung des Schiebers 5 in Richtung A genutzt werden.

Die miteinander korrespondierenden Rastelemente, die einerseits am Schieber 5 vorhanden sind und zur funktionsgerechten Positionierung der in den Halterungen 7 befindlichen optischen Elemente innerhalb des Mikroskopstativs 1 dienen, sind nun andererseits am Kreuzschlitten 14 vorhanden.

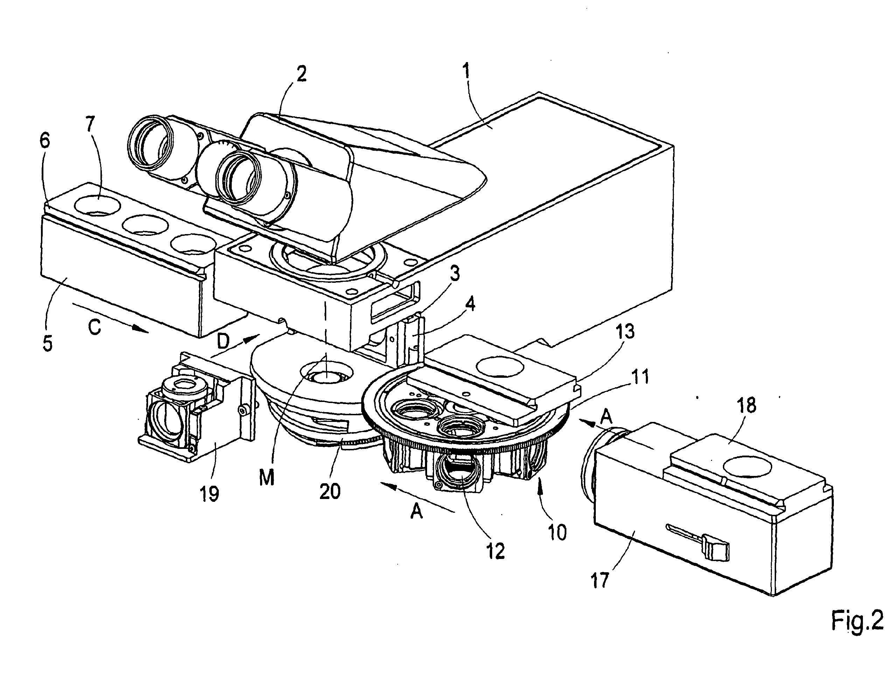

Ein weiteres Beispiel ist in Fig.2 dargestellt, zu dessen Beschreibung werden der Übersichtlichkeit halber die Bezugszeichen in derselben Zuordnung zu Baugruppen verwendet wie bisher.

So sind hier wiederum das Mikroskopstativ 1 und der Mikroskoptubus 2 zu erkennen. Am Mikroskopstativ 1 befinden sich wiederum eine Führungsbahn 3 und ein Durchbruch 4. Ebenfalls vorhanden sind ein Schieber 5, ausgestattet mit einer Gleitbahn 6 und mit Halterungen 7 für optische Elemente, beispielsweise auch wieder Reflektoren oder Filter.

Die Führungsbahn 3 und der Durchbruch 4 sind in diesem Fall durchgängig ausgebildet, d.h. das Mikroskopstativ 1 ist beidseitig geöffnet, so daß es möglich ist, den Schieber 5 in Richtung C (die der Richtung A entgegengesetzt ist) in das Mikroskopstativ 1 einzuführen und auch hierbei die in den Halterungen 7 aufgenommenen einzelnen optischen Elemente im Mikroskopstrahlengang M zu positionieren, wie bereits anhand des ersten Ausführungsbeispiels nach Fig.1 beschrieben.

Weiterhin ist, wie auch schon im vorangegangenen Ausführungsbeispiel, ein Revolver 10 mit einer Trommel 11 vorhanden, die mit Halterungen 12 für optische Elemente ausgestattet ist. Auch dieser Revolver 10 verfügt über eine Gleitbahn 13, die in diesem Fall paßgenau zur Führungsbahn 3 ausgebildet ist, so daß der Revolver 10 mittels der aus der Führungsbahn 3 und der Gleitbahn 13 gebildeten Geradführung in das Mikroskopstativ 1 eingeführt werden kann. Selbstverständliche Vorraussetzung dafür ist, daß das Mikroskopstativ 1 nicht bereits durch den Schieber 5 besetzt ist.

Im Unterschied zum Ausführungsbeispiel nach Fig.1 ist hier weiterhin eine optische Baugruppe 17 vorgesehen, beispielhaft zur Auskopplung eines Teilstrahlengangs aus dem Mikroskopstrahlengang M für eine Kamera. Die optische Baugruppe 17, die ebenso in einem Mikroskopaufbau nach Fig.1 Anwendung finden kann, ist an ihrer Oberseite mit einer Gleitbahn 18 ausgestattet, die gleitend in die Führungsbahn 3 eingreifen kann. Damit ist es möglich - alternativ zum Schieber 5 und zum Revolver 10 - diese optische Baugruppe 17 in das Mikroskopstativ 1 einzubringen. Erfindungsgemäß kann das Mikroskop nun, je nach Bedarf, entweder in Verbindung mit dem Schieber 5, dem Revolver 10 oder der optischen Baugruppe 17 betrieben werden.

Das Einbringen des Revolvers 10 bzw. der optischen Baugruppe 17 in das Mikroskopstativ 1 erfolgt, wie in Fig.2 dargestellt, jeweils in Richtungen A, während der Schieber 5 in Richtung C eingebracht werden kann. Alternativ ist es auch möglich, Revolver 10 und Schieber 5 in beiden Richtungen in das Mikroskopstativ 1 einzuschieben.

Optional kann das Mikroskopstativ 1 auch noch mit einer Aufnahme für eine in Richtung D einzubringende Vergrößerungsoptik 19 (vgl. Fig.2) oder mit einer Aufnahme für einen Objektivrevolver 20 (vgl. Fig.1 und Fig.2) ausgestattet sein. Vorteilhafterweise sollte der Revolver 10 mit einer Haube 21 abgedeckt sein (vgl. Fig.1).

Bei den vorstehend beschriebenen Ausgestaltungen, wonach unmittelbar an die Führungsbahn 8 ein Revolver 10 genutzt werden kann, handelt es sich lediglich um Beispiele. Im Rahmen der Erfindung liegt es darüber hinaus, in die Führungsbahn 8 eine oder auch mehrere optisch wirksame Baugruppen einzusetzen, deren Funktion ein- und ausschaltbar ist, wie beispielsweise BEREK-Prismen.

### Bezugszeichenliste

- 1: Mikroskopstativ
- 2: Mikroskoptubus
- 3: Führungsbahn
- 4: Durchbruch
- 5: Schieber
- 6: Gleitbahn
- 7: Halterungen
- 8: Führungsbahn
- 9: Durchbruch
- 10: Revolver
- 11: Trommel
- 12: Halterungen
- 13: Gleitbahn
- 14: Kreuzschlitten
- 15: Gleitbahn
- 16: Führungsbahn
- 17: optische Baugruppe
- 18: Gleitbahn
- 19: Vergrößerungsoptik
- 20: Aufnahme für Objektivrevolver
- 21: Haube

- A, B, C, D: Richtungen
- M: Mikroskopstrahlengang

## Patentansprüche

1. Mikroskop mit einer Wechseleinrichtung, mit welcher optische Elemente unterschiedlicher optischer Eigenschaften in Abhängigkeit von der jeweils mit dem Mikroskop zu lösenden Beleuchtungs- und/oder Beobachtungsaufgabe in den Mikroskopstrahlengang gestellt werden, wobei die Wechseleinrichtung ausgestattet ist mit Mitteln
- zur Aufnahme eines einzelnen optischen Elementes und zu dessen funktionsgerechter Ausrichtung im Mikroskopstrahlengang und
- zur Aufnahme von Magazinen unterschiedlicher Bauart, in denen jeweils mehrere optische Elemente bevorratet sind, und zur funktionsgerechten Ausrichtung jeweils mindestens eines dieser Elemente im Mikroskopstrahlengang, **dadurch gekennzeichnet, daß** ein Adapter zur Ankopplung unterschiedlicher Magazine oder einzelner optischer Elemente verwendet wird, wobei der Adapter als Kreuzschlitten (14) mit zwei orthogonal zueinander ausgerichteten Geradführungen ausgebildet ist und
- der Kreuzschlitten (14) über eine erste Geradführung mit dem Mikroskopstativ (1) und
- wahlweise ein ausgewählter Schieber (5), ein ausgewählter Revolver (10) oder ein ausgewähltes einzelnes optisches Element über die zweite Geradführung an den Kreuzschlitten (14) und dadurch mittelbar über den Adapter an das Mikroskopstativ (1) gekoppelt ist.

2. Mikroskop nach Anspruch 1, bei dem
- die Magazine in Form von Schiebern (5) ausgebildet sind,
- mehrere optische Elemente in Reihe auf dem Schieber (5) angeordnet sind und
- die zweite Geradführung zur Ankopplung eines ausgewählten Schiebers (5) an das Mikroskopstativ (1) verwendet wird, wobei der Schieber (5) geradlinig relativ zum Mikroskopstativ (1) verschiebbar ist.

3. Mikroskop nach Anspruch 2, **dadurch gekennzeichnet, daß** bezüglich der Verschiebung Raststellungen vorgesehen sind und in jeder Raststellungen eines der auf dem Schieber (5) bevorrateten optischen Elemente funktionsgerecht im Mikroskopstrahlengang (M) positioniert ist.

4. Mikroskop nach einem der Ansprüche 2 oder 3, bei dem die Schieber (5) zur Aufnahme von Reflektoren oder Filtern mit verschiedenen optischen Eigenschaften ausgebildet sind.

5. Mikroskop nach Anspruch 1, bei dem die Magazine
- in Form von Revolvern (10) ausgebildet sind,
- in jedem Revolver (10) mehrere optische Elemente auf einer drehbaren Trommel (11) angeordnet sind und
- die zweite Geradführung zur Ankopplung eines ausgewählten Revolvers (10) an das Mikroskopstativ (1) verwendet wird, wobei der Revolver (10) mittels der Geradführung bis in eine Arbeitsposition relativ zum Mikroskopstativ (1) verschiebbar ist.

6. Mikroskop nach Anspruch 5, **dadurch gekennzeichnet, daß** in der Arbeitsposition des Revolvers (10) durch Drehung der Trommel (11) ein einzelnes der auf der Trommel (11) bevorrateten optischen Elemente im Mikroskopstrahlengang (M) positionierbar ist.

7. Mikroskop nach einem der Ansprüche 5 oder 6, bei dem auf der Trommel (11) optische Elemente, insbesondere Objektive mit verschiedenen optischen Eigenschaften, bevorratet sind.

8. Mikroskop nach einem der vorgenannten Ansprüche, bei dem optische Elemente in den Magazinen vorgesehen sind beispielsweise
- in Form von Strahlteilern zur Auskopplung eines Teilstrahlenganges aus dem Beobachtungsstrahlengang des Mikroskops oder zur Einkopplung von Auflicht in den Beleuchtungsstrahlengang des Mikroskops,
- in Form von Filtern,
- in Form von Vergrößerungsoptiken
- in Form von optischen Elementen für Kontrastverfahren, wie Dunkelfeld, Polarisationskontrast oder Differentialinterferenzkontrast, sowie
- weitere optische Elemente und auch Kombinationen der vorgenannten Elemente,
jeweils zum zeitweiligen Einbringen in den Mikroskopstrahlengang.

## Claims

1. Microscope with a changer apparatus, by means of which optical elements with different optical properties are placed into the microscope beam path depending on the respective illumination and/or observation problem addressed by the microscope, wherein the changer apparatus is equipped with means
- for holding an individual optical element and for the functional alignment thereof in the microscope beam path, and
- for holding magazines of different designs, in which in each case a plurality of optical elements are stored, and for functional alignment of in each case at least one of these elements in the microscope beam path, **characterized in that** an adapter is used for coupling different magazines or individual optical elements, wherein the adapter is embodied as a cross slide (14) with two straight-line guides aligned orthogonally to one another and
- the cross slide (14) is coupled via a first straight-line guide to the microscope stand (1) and,
- optionally, a selected slider (5), a selected revolver (10) or a selected individual optical element is coupled via the second straight-line guide to the cross slide (14) and, thereby, indirectly to the microscope stand (1) via the adapter.

2. Microscope according to Claim 1, wherein
- the magazines are embodied in the form of sliders (5),
- a plurality of optical elements are arranged in a row on the slider (5) and
- the second straight-light guide is used for coupling a selected slider (5) to the microscope stand (1), wherein the slider (5) can be displaced in a straight line relative to the microscope stand (1).

3. Microscope according to Claim 2, **characterized in that** latching positions are provided with respect to the displacement and one of the optical elements stored on the slider (5) is functionally positioned in the microscope beam path (M) in each latching position.

4. Microscope according to either of Claims 2 or 3, wherein the slider (5) is embodied to hold reflectors or filters with different optical properties.

5. Microscope according to Claim 1, wherein
- the magazines are embodied in the form of revolvers (10),
- a plurality of optical elements are arranged on a rotatable drum (11) in each revolver (10), and
- the second straight-line guide is used for coupling a selected revolver (10) to the microscope stand (1), wherein the revolver (10) can be displaced by means of the straight-line guide to a work position relative to the microscope stand (1).

6. Microscope according to Claim 5, **characterized in that** an individual one of the optical elements stored on the drum (11) can be positioned in the microscope beam path (M) in the work position of the revolver (10) by rotating the drum (11).

7. Microscope according to either of Claims 5 or 6, wherein optical elements, in particular objectives with different optical properties, are stored on the drum (11).

8. Microscope according to one of the preceding claims, wherein optical elements are provided in the magazines, for example
- in the form of beam splitters for decoupling a partial beam path from the observation beam path of the microscope or for coupling reflected light into the illumination beam path of the microscope,
- in the form of filters,
- in the form of magnification optical units,
- in the form of optical elements for contrast methods, such as dark field, polarization contrast or differential interference contrast methods, and
- further optical elements or else combinations of the aforementioned elements,
in each case for temporary introduction into the microscope beam path.

## Revendications

1. Microscope comportant un dispositif d'échange au moyen duquel des éléments optiques ayant des propriétés optiques différentes sont placés sur le trajet du faisceau du microscope en fonction de la tâche d'éclairement et/ou d'observation devant être respectivement résolue au moyen du microscope, dans lequel le dispositif d'échange est muni de moyens destinés à
- recevoir un élément optique individuel et l'orienter fonctionnellement dans le trajet du faisceau du microscope, et
- recevoir des chargeurs de types différents dans lesquels de multiples éléments optiques sont respectivement approvisionnés et à orienter fonctionnellement au moins l'un de ces éléments respectifs sur le trajet du faisceau du microscope, **caractérisé en ce qu'**on utilise un adaptateur destiné à coupler différents chargeurs ou éléments optiques individuels, dans lequel l'adaptateur est réalisé sous la forme d'une platine à chariot (14) comportant deux glissières orientées perpendiculairement l'une à l'autre et
- la platine à chariot (14) est couplée par l'intermédiaire d'une première glissière au pied de microscope (1), et
- un coulisseau sélectionné (5), un élément tournant sélectionné (10) ou un élément optique individuel sélectionné est couplé au choix par l'intermédiaire de la seconde glissière à la platine à chariot (14) et est directement couplé par l'intermédiaire de l'adaptateur au pied de microscope (1).

2. Microscope selon la revendication 1, dans lequel
- le chargeur est réalisé sous la forme de coulisseaux (5),
- de multiples éléments optiques sont agencés en rangée sur le coulisseau (5), et
- la seconde glissière est utilisée pour raccorder un coulisseau sélectionné (5) au pied de microscope (1), dans lequel le coulisseau (5) peut être déplacé en ligne droite par rapport au pied de microscope (1).

3. Microscope selon la revendication 2, **caractérisé en ce qu'**il est prévu des positions crantées par rapport au déplacement et **en ce qu'**à chaque position crantée, l'un des éléments optiques approvisionnés sur le coulisseau (5) est positionné fonctionnellement sur le trajet du faisceau du microscope (M).

4. Microscope selon l'une quelconque des revendications 2 ou 3, dans lequel les coulisseaux (5) sont conçus pour recevoir des réflecteurs ou des filtres ayant des propriétés optiques différentes.

5. Microscope selon la revendication 1, dans lequel
- les chargeurs sont réalisés sous forme d'éléments tournants (10),
- de multiples éléments optiques sont disposés sur un barillet tournant (11) dans chaque élément tournant (10),
- la seconde glissière est utilisée pour le raccordement d'un élément tournant sélectionné (10) au pied de microscope (1), dans lequel l'élément tournant (10) peut être déplacé au moyen de la glissière jusqu'à une position de fonctionnement par rapport au pied de microscope (1).

6. Microscope selon la revendication 5, **caractérisé en ce qu'**à la position de fonctionnement de l'élément tournant (10), un élément individuel parmi les éléments optiques approvisionnés sur le barillet (11) peut être positionné sur le trajet de faisceau du microscope (M) par mise en rotation du barillet (11).

7. Microscope selon l'une quelconque des revendications 5 ou 6, dans lequel des éléments optiques, notamment des objectifs ayant des propriétés optiques différentes, sont approvisionnés sur le barillet (11).

8. Microscope selon l'une quelconque des revendication précédentes, dans lequel des élément optiques sont prévus dans les chargeurs, par exemple
- sous forme de diviseurs de faisceaux pour le couplage en sortie d'un trajet de faisceau partiel à partir du trajet de faisceau d'observation du microscope ou pour le couplage en entrée de lumière incidente dans le trajet de faisceau d'éclairement du microscope,
- sous forme de filtres,
- sous forme d'optiques de grossissement,
- sous forme d'éléments optiques pour processus de contraste, tels qu'un champ foncé, qu'un contraste de polarisation, ou qu'un contraste d'interférence différentiel, ainsi que
- d'autres éléments optiques et des combinaisons desdits éléments optiques,
afin de les introduire respectivement de manière temporaire dans le trajet de faisceau du microscope.
